# EUROPÄISCHE PATENTSCHRIFT

(11) **EP 1 485 225 B1**
(45) Veröffentlichungstag und Bekanntmachung des Hinweises auf die Patenterteilung: **30.07.2008**
(21) Anmeldenummer: 03704157.1
(22) Anmeldetag: 12.03.2003
(51) Int. Cl.: B23K 11/06

(54) **VERFAHREN UND SCHWEISSVORRICHTUNG ZUM KONTURSCHWEISSEN**
METHOD AND WELDING DEVICE FOR CONTOUR WELDING
PROCEDE ET DISPOSITIF DE SOUDAGE POUR SOUDAGE DE CONTOUR

(30) Priorität: 12.03.2002 CH 428022002
(43) Veröffentlichungstag der Anmeldung: 15.12.2004
(73) Patentinhaber: Soutec Soudronic AG, 8413 Neftenbach (CH)
(72) Erfinder: VAL, André, CH-8450 Andelfingen (CH); MÜLLER, Jakob, CH-2073 Enges (CH)
(74) Vertreter: Schalch, Rainer
(86) Internationale Anmeldenummer: PCT/CH2003/000165
(87) Internationale Veröffentlichungsnummer: WO 2003/076115

(56) Entgegenhaltungen:
- DE-A- 4 013 035
- US-A- 4 652 718
- US-A- 5 010 226

## Beschreibung

Die Erfindung betrifft ein Verfahren zum Konturschweissen bzw. zu einer Konturverfolgung gemäss Oberbegriff des Anspruchs 1. Ferner betrifft die Erfindung eine Schweissvorrichtung zum Konturschweissen bzw. eine Konturverfolgungsvorrichtung gemäss Oberbegriff des Anspruchs 11.

Durch Konturschweissen werden in der Regel Behälter, z.B. Tanks, gebildet, die zwei Halbschalen umfassen, die gemeinsam einen Flansch bilden. Zwischen den Schweissrollen wird dieser Flansch geschweisst. Auch ebene Bleche, die für eine nachfolgende Innenhochdruckumformung vorgesehen sind, werden aufeinanderliegend entlang einer gewünschten Kontur verschweisst.

### Stand der Technik

Es ist bekannt, Rollnaht-Schweissmaschinen als Konturschweissmaschinen einzusetzen. Zwei Schweissrollen, eine obere und eine untere Schweissrolle, denen jeweils eine Drahtelektrode zugeführt wird, folgen dabei der Kontur der aufeinanderliegenden, vorgehefteten Schweissflansche der Behälterhälften. Für das Schweissen von Behältern ist es dabei bekannt, einen Werkstücktisch zur Aufnahme des vorgehefteten Behälters vorzusehen, welcher Tisch mit einer Kontur, z.B. einer Aussenkontur, versehen ist, die der zu schweissenden Tank-Kontur entspricht. Der Werkstücktisch wird dann entlang seiner Kontur bewegt und damit wird auch der Schweissflänsch des auf dem Tisch befestigten Behälters zwischen den an der Maschine lagefest angeordneten Schweissrollen bewegt. Diese Art der Bewegung des Behälters, wobei der Antrieb des Tisches bekannterweise mittels einer Verzahnung der Tischaussenkontur und einem daran angreifenden Antriebszahnrad erfolgt und ferner ein angetriebener Arm (sogenannter Pantograph) am Tisch angreift, der die Tangentialität der Kontur zur Schweissrichtung sicherstellt, hat sich für die Schweissung von Behältern mit eben verlaufendem Schweissflansch bewährt und ist gemäss EP-A-0622 147 auch für dreidimensional verlaufende Schweissflansche verwendbar. Dadurch, dass die abgefahrene Kontur mechanisch durch die Tischaussenkontur vorgegeben ist, ist diese Lösung nicht flexibel, wenn Konturänderungen erfolgen sollen bzw. verschiedene Konturen geschweisst werden sollen, z.B. bei Kleinserien. Es ist auch schon vorgeschlagen worden, den Behälter durch einen Roboter zu bewegen, z.B. gemäss US-A-5 010 226, US-A-4 652 718 oder DE-A-3603 919. Roboter sind indes teuer, aufwendig zu programmieren und stellen Platzprobleme bzw. Arbeitssicherheitsprobleme.

### Darstellung der Erfindung

Der Erfindung lag deshalb die Aufgabe zugrunde, ein Verfahren bzw. eine Vorrichtung zu schaffen, die eine einfache Möglichkeit zum Konturschweissen mittels Rollnaht-Schweissmaschinen bzw. zum Verfolgen einer Kontur bei einer anderen Bearbeitungsmaschine ergibt, die die genannten Nachteile nicht aufweist. Diese Aufgabe wird mittels der kennzeichnenden Merkmale des Anspruchs 1 bzw. des Anspruchs 11 gelöst.

Dadurch, dass das Werkstück neu frei drehbar auf seiner Halterung angeordnet ist, braucht die Kontur nicht mechanisch festgelegt zu werden. Sie ergibt sich durch die von den angetriebenen Schweissrollen bewirkte Drehung des Werkstückes, die mehr oder minder durch die Lageverstellung der Drehachse kompensiert wird. Diese Lageverstellung ist durch eine einfache Kinematik möglich. die Steuerung von Schweissrollen und Lageverstellung ermöglicht das Abfahren von Konturen auf einfache und kostengünstige Weise. Konturänderungen können lediglich durch geänderte Bewegungsprogrammierung der Steuerung erzielt werden. Die Kontur kann konvexe und/oder konkave Kurvenformen aufweisen; die mechanische Maschinengeometrie bestimmt die minimalen Radien.

Bevorzugterweise wird der Drehwinkel des frei drehbaren Werkstückes bzw. der Drehwinkel von dessen Halterung erfasst. Dies ermöglicht eine Regelung, bei der das korrekte Abfahren der Kontur geregelt werden kann.

Das Verfahren und die Vorrichtung sind zunächst anhand des Hauptanwendungsgebietes, des Konturschweissens beansprucht und nachfolgend beschrieben. Grundsätzlich ist es auch möglich, durch das beschriebene Grundprinzip einer Kontur auch für andere Anwendungen nachzufahren. Wesentlich dabei ist wiederum die frei drehbare Halterung und das Vorsehen von das Werkstück klemmenden, angetriebenen Rollen - die in diesem Fall keine Schweissrollen sind - deren Drehbewegung des Werkstückes um die Drehachse durch die Lageänderung der Drehachse vollständig oder unvollständig kompensiert bzw. überkompensiert wird. Bei den Rollen befinden sich dann Werkzeuge, z.B. ein Markiergerät, das die Kontur auf dem Werkstück anzeichnet oder z.B. ein Laserschneidkopf, der entsprechend der Kontur das Werkstück bearbeitet.

### Kurze Beschreibung der Zeichnungen

Im folgenden werden Ausführungsbeispiele anhand der Zeichnungen näher erläutert. Dabei zeigt
Figur 1 schematisch eine Rollnaht-Schweissmaschine gemäss der Erfindung in Seitenansicht; und zeigen die
Figuren 2 bis 7 vereinfachte Ansichten von oben auf die Maschine von Figur 1 während verschiedenen Positionen beim Abfahren einer Kontur, und
   zeigt die Figur 8 eine nicht erfindungsgemäasse Ausführungsform ohne Schweiss- oder Klemmrollen mit angetriebener Drehung um die vertikale Achse; und
   zeigen die Figuren 9 bis 14 Bewegungen bei der nicht erfindungsgemässen Ausführungsform nach Figur 8.

### Bester Weg zur Ausführung der Erfindung

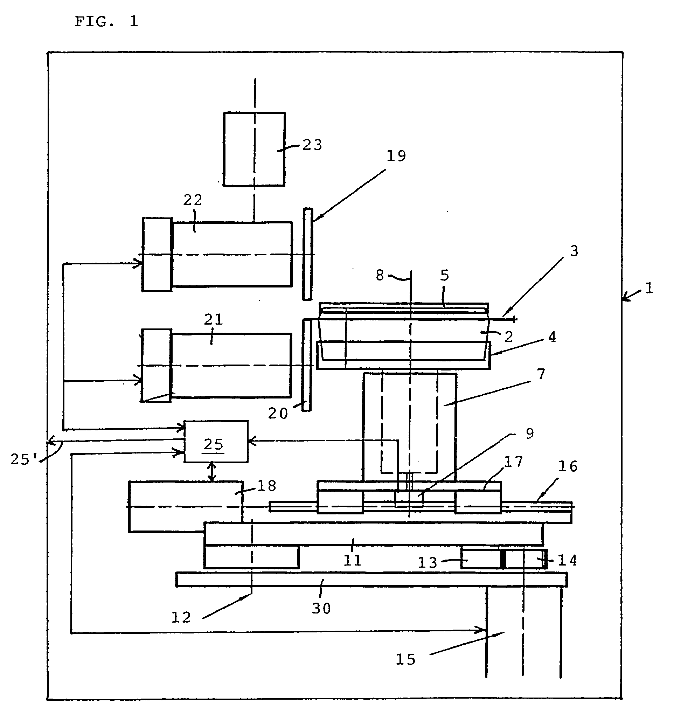

Figur 1 zeigt in schematischer Seitenansicht eine Rollnaht-Schweissmaschine bzw. eine Konturschweissmaschine, welche gemäss der Erfindung ausgestaltet ist bzw. mit welcher das erfindungsgemässe Verfahren durchführbar ist. Die Schweissmaschine 1 weist dabei ein nur angedeutetes Maschinengestell 30 auf, an welchem die weiteren nachfolgend genannten Bauteile befestigt sind. Diese umfassen insbesondere eine Aufnahme 4 bzw. einen Tisch 4 zur Aufnahme des Werkstückes 2, 3 sowie vorzugsweise auch eine obere Halterung 5 und/oder Saugereinheiten oder Elektromagnete in der Halterung, mit welcher das Werkstück auf dem Tisch 4 fixiert wird. Der Tisch 4 kann eine an das Werkstück 2 angepasste Form aufweisen, was die Positionierung des Werkstückes auf dem Tisch erleichtert. Im gezeigten Beispiel ist das Werkstück 2 ein Behälter, der aus zwei Hälften gebildet ist, die zusammen einen Flansch 3 bilden, der entlang einer vorgegebenen Kontur verschweisst werden muss. Wie vorstehend erwähnt, kann das Werkstück aber auch aus zwei im wesentlichen ebenen Blechen bestehen, die aneinanderliegend verschweisst werden. Die Verschweissung erfolgt auf an sich bekannte Weise mittels der Schweissrollen 19 und 20, auf welchen eine Drahtzwischenelektrode läuft, die in der Zeichnung nicht dargestellt ist, was aber bekannt ist und hier nicht näher erläutert werden muss. Die Schweissrollen 19 und 20 besitzen eine Stromzufuhr und allenfalls Kühlung und sind im vorliegenden Fall angetrieben, was generell durch den oberen bzw. unteren Schweissrollenantrieb 22 bzw. 21 in der Zeichnung dargestellt ist. Ein Betätigungselement 23 fährt dabei zur Schweissung die obere Schweissrolle 19 nach unten, so dass sie den Flansch 3 des Werkstückes 2 mit der erforderlichen Anpresskraft kontaktiert. Zur Beschickung der Maschine mit den vorgehefteten Behälterhälften und zur Entnahme des geschweissten Behälters ist die Rolle in die dargestellte abgehobene Stellung gefahren.

Gemäss der Erfindung ist die Aufnahme 4 mit der Halterung 5 bzw. ist das Werkstück 2 nun um eine Achse 8 frei drehbar. Eine entsprechende Drehaufnahme 7 ist unterhalb der Aufnahme 4 angeordnet und lagert diese um die Achse 8 frei drehbar. Frei drehbar bedeutet dabei, dass die Werkstückaufnahme 4 und das Werkstück 2 durch daran angreifende Kräfte um die Achse 8 frei drehbar sind. Die Achse 8 steht dabei senkrecht zur Schweissebene, welche im wesentlichen mit der Ebene des Flansches 3 zusammenfällt. Zur Beschickung der Teilaufnahme bzw. des Tisches 4 ist dieser vorzugsweise in einer definierten Startstellung vor der Schweissung blockierbar, so dass die Beschickung bei stets gleicher Startstellung des Tisches 4 erfolgen kann, was für eine automatische Beschickung vorteilhaft ist. Gleichzeitig bildet die Startstellung eine definierte Ausgangsposition für das Abfahren der Kontur. Da am Ende der Schweissung die Kontur vollständig abgefahren ist, befindet sich dann die Werkstückaufnahme 4 wieder in derselben Stellung, die der Startstellung entspricht. In der Regel wird daher am Ende der Schweissung der Tisch durch ein nicht dargestelltes Blockiermittel blockiert, so dass er in dieser Stellung, die auch als Startstellung dient, fixiert ist. Es kann dann nach Entnahme des geschweissten Werkstückes die Beschickung mit einem weiteren zu schweissenden Werkstück erfolgen, worauf die Schweissrollen 19 und 20 in Schweissposition gebracht werden und die Blockierung des Tisches 4 aufgehoben wird, so dass er während der Schweissung frei um die Achse 8 drehbar ist. Die Drehaufnahme 7 und damit die Achse 8 ist nun an der Maschine 1 lageveränderbar angeordnet, so dass die Position der Achse 8 während des Schweissens verändert werden kann. Diese Veränderung kann auf irgendeine geeignete Weise mechanisch bewirkt werden. So könnte z.B. die Drehaufnahme 7 auf einem x- y-Tisch angeordnet sein, der die angetriebene Lageveränderung in x- y-Richtung ausführt, während die Achse 8 die z-Richtung bildet. Der Antrieb für die Lageveränderung bildet dabei vorzugsweise auch Teil der Schweissmaschine 1. Es könnte aber auch so sein, dass an der Schweissmaschine lediglich die lageveränderbare Halterung der Drehaufnahme 7 angeordnet ist und deren Antrieb von aussen erfolgt, z.B. durch einen Roboter oder eine Beschickungsanordnung, welche zuvor das Werkstück auf die Drehaufnahme bzw. die Teilaufnahme 4 aufgesetzt hat. Es wäre auch möglich, die Drehaufnahme überhaupt, ohne Führung an der Schweissmaschine, durch einen externen Roboter in ihrer Lage zu verändern. Dem Roboter kann dazu ein Signal aus der Steuerung 25 der Maschine 1 zugeführt werden, was nachfolgend noch erläutert wird. Bevorzugterweise ist aber die Kinematik zur Lageveränderung der Drehaufnahme 7 ein Teil der Schweissmaschine 1, da dadurch die Vorteile der vorliegenden Erfindung am besten zum Tragen kommen. Beim gezeigten Ausführungsbeispiel ist die Drehaufnahme 7 einerseits auf einer Linearführung angeordnet, welche Schienen 16 aufweist und einen darauf fahrenden Schlitten 17, welcher seinerseits die Drehaufnahme 7 trägt. Der Schlitten 17 ist dabei durch einen Antrieb 18, z.B. einen Spindelantrieb mit einem Elektromotor entlang der Führung 16 linear verschiebbar. Die Führung 16 mit dem Schlitten 17 ist ihrerseits auf einer Schwenkplatte 11 angeordnet, welche um eine Schwenkachse 12 verschwenkbar ist, wozu unterhalb der Platte 11 ein bogenförmiger Zahnkranz 13 angeordnet sein kann, in welchem ein Zahnrad 14 kämmt, welches von einem Elektromotor 15 angetrieben wird. Dies erlaubt eine angetriebene Schwenkung der Platte 11 um die Schwenkachse 12 um einen vorgegebenen Winkel, was noch näher erläutert wird. Die Schwenkachse 12 liegt parallel zur Drehachse 8.

Weiter ist ein Winkelgeber 9 vorgesehen, welcher ein Signal abgibt, das vom Drehwinkel der Drehung der frei drehbaren Teilaufnahme 4 bzw. des Werkstückes 2 abhängt. Dieses Signal wird an die Steuerung/Regelung 25 abgegeben, welche ihrerseits mit den erwähnten Antrieben 15, 18, 21 und 22 in Verbindung steht und auch weitere Elemente der Maschine steuern kann, so insbesondere die angetrieben absenkbare Halterung 5 für das Werkstück. Wie bereits erwähnt, können von der Steuerung/Regelung auch Signale nach aussen gegeben werden, was durch die Verbindung 25' angedeutet ist.

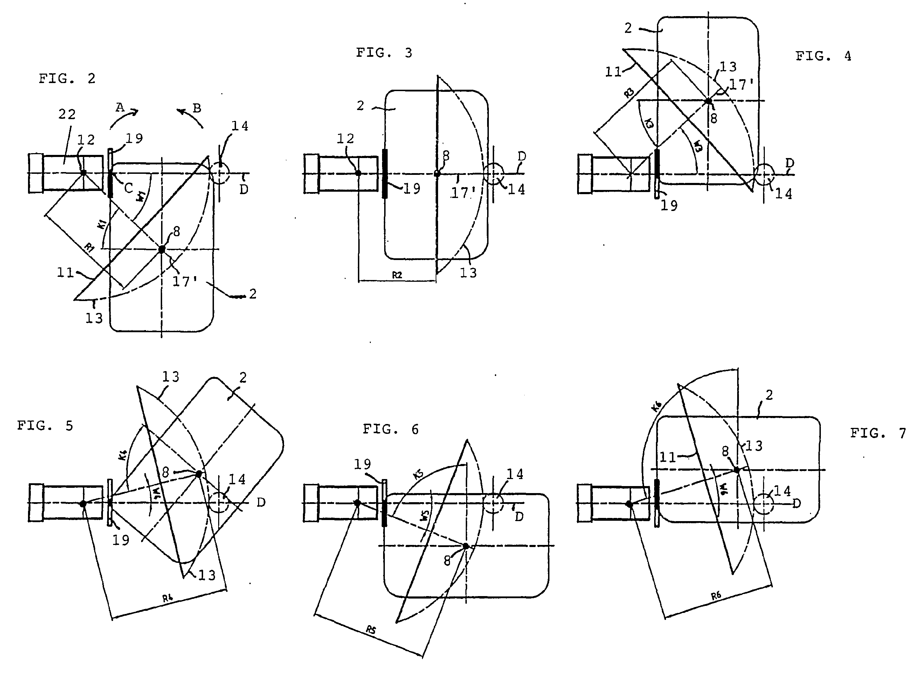

Im folgenden wird nun anhand der Figuren 2 bis 7, welche eine vereinfachte Draufsicht auf die Schweissmaschine von Figur 1 mit verschiedenen Werkstückstellungen zeigen, das Verfahren näher erläutert. In den Figuren 2 ist dabei insbesondere die obere Schweissrolle ersichtlich, mit deren Antrieb 22. Ferner ist das Werkstück 2 von oben ersichtlich und schematisch die um die Schwenkachse 12 drehbare Platte 11, welche zur Vereinfachung der Zeichnung lediglich als Strich dargestellt ist, sowie der bogenförmige Zahnkranz 13, an dem das maschinenfeste, antreibbare Zahnrad 14 des Schwenkantriebes angreift. Die Linearführung 16, 17, welche die Drehaufnahme 7 und damit die Schwenkachse 8 trägt, ist zur einfacheren zeichnerischen Darstellung lediglich durch die Linie 17' angegeben. Die Verstellung des Linearantriebes verändert dabei den Abstand der in den Figuren 2 bis 7 nicht dargestellten Drehaufnahme 7 bzw. der dargestellten Drehachse 8 von der Schwenkachse 12, was durch die Abstandsangabe R1 (Radius 1) in der Figur dargestellt ist. Die entsprechenden weiteren Radien in den weiteren Figuren sind entsprechend mit R2 bis R6 bezeichnet. Mit K1 (Kontrollwinkel 1) ist derjenige Winkel bezeichnet, der durch den Drehwinkelgeber 9 erfasst wird. Die entsprechenden Winkel in den anderen Figuren sind mit K3 bis K6 bezeichnet. Mit W1 und W3 bis W6 ist der Schwenkwinkel der Platte 11 bzw. 17' angegeben, so dass W und R die Polarkoordinaten der Position der Achse 8 sind.

Figur 2 zeigt nun eine mögliche Startstellung, wobei das Werkstück 2 in die entsprechend blockierte Teileaufnahme beschickt worden ist und darin fixiert worden ist. Die obere Schweissrolle wird nun auf das Werkstück 2, bzw. dessen Flansch 3 abgesenkt, und die Schweissung kann am Startpunkt C beginnen, wozu zuvor die Blockierung der Werkstückaufnahme 4 bzw. des Werkstückes 2 aufgehoben wird. Die Schweissrollen 19 und 20 werden nun drehend angetrieben und mit dem Schweissstrom versorgt, um die Kontur zu schweissen. Die Schweissung selber kann dabei mit herkömmlichen Parametern erfolgen. So kann beschichtetes der unbeschichtetes Stahl- oder anderes schweissbares Blech mit einer fixen oder der Kontur angepassten Geschwindigkeit mit einer herkömmlichen, vorzugsweise elliptischen, Drahtelektrode geschweisst werden. Ebenso sind andere Drahtformen (flach, längsgerillt, trieliptic und auch andere) oder Schweissrollen ohne Draht denkbar. Die Schweissnahtbreite kann dabei z.B. 1,2 mm betragen und die Schweisskraft z.B. 90 daN, wobei z.B. ein Schweissstrom von 6,5 kA fliesst. Die Nahtbreite, die Schweisskraft und der Schweissstrom hängen stark vom zu verschweissenden Material, der Beschichtung, der Blechdicke sowie der Schweissgeschwindigkeit ab.

Bei der angetriebenen Drehung der Schweissrollen 19, 20, die zwischen sich den Flansch 3 festklemmen und die maschinenfest angeordnet sind, entsteht ein Drehmoment, welches das Werkstück 2 um die Achse 8 drehen will, wobei der Drehsinn gemäss Pfeil A verläuft, wenn die Schweissung entlang der langen Seite des Werkstückes in Figur 2 erfolgt. Andererseits kann durch eine Lageveränderung der Drehachse 8 um den jeweiligen Klemmpunkt des Werkstückes 2 zwischen den Schweissrollen 19, 20 eine Drehbewegung des Werkstückes im Drehsinn gemäss Pfeil B bewirkt werden, wenn die Drehachse 8 in Figur 2 in Richtung der Linie D bewegt wird, wodurch der Winkel W1 abnimmt. Bei aufeinander abgestimmter Drehgeschwindigkeit der Schweissrollen 19 und Verschiebung der Drehachse 8 können die beiden Drehungen des Werkstückes 2 um die Drehachse 8 kompensiert werden, so dass das Werkstück in gerader Linie zwischen den Schweissrollen hindurchbewegt wird. Ausgehend von der Stellung von Figur 2 erfolgt dies demgemäss dadurch, dass das Zahnrad 14 im Uhrzeigersinn angetrieben wird, was eine Schwenkbewegung der Drehachse 8 um die Schwenkachse 12 in Richtung der Linie D bewirkt, wobei gleichzeitig der Radius R1 entsprechend so verändert wird, dass das Werkstück auf der geradlinigen zu schweissenden Kontur zwischen den Schweissrollen 19, 20 hindurchbewegt wird. Figur 3 zeigt die entsprechende Stellung nach der Hälfte der zu schweissenden langen Seite des Werkstückes zwischen den Schweissrollen 19, 20. Der in Figur 2 als Winkel W1 eingetragene Winkel beträgt nun 0° und die Drehachse 8 befindet sich auf der Linie D. Der Abstand der Drehachse 8 von der Schwenkachse 12 ist minimal und beträgt R2. Beim weiteren Fahren der Schweissrollen 19, 20 bzw. des Werkstückes 2 erfolgt ein Weiterschwenken der Schwenkführung um die Schwenkachse 12, wie dies in der Figur 2 in der Endstellung der Schweissung der langen Seite des Werkstückes 2 dargestellt ist. Die Drehachse 8 ist nun verglichen mit Figur 2 am weitesten auf die andere Seite der Linie D geschwenkt. Es ist nun die erste Krümmung der Kontur zu schweissen. Die Schweissrollen treiben weiterhin das Werkstück an, wobei im gekrümmten Abschnitt der Kontur die Schweissrollengeschwindigkeit verringert sein kann. Die Schweissrollen bewirken dabei weiterhin eine Drehung des Werkstückes im Drehsinn des Pfeiles A um die Drehachse 8, was nun zum Abfahren einer gekrümmten Kontur verwendet wird, indem die Lageveränderung der Schwenkachse 8 die Drehung des Werkstückes im Drehsinn A nicht mehr vollständig kompensiert, wie dies bis anhin der Fall gewesen ist. Der Antrieb des Zahnrades 18 erfolgt nun im Gegenuhrzeigersinn aber derart verlangsamt, dass die durch die Schweissrollen bewirkte Drehung des Werkstückes im Drehsinn A grösser ist, als die durch die Schwenkführung bewirkte Drehung im Drehsinn B, so dass das Werkstück 2 nun eine Drehbewegung ausführt, wie dies in Figur 5 dargestellt ist. Durch entsprechende Wahl der Geschwindigkeit der Schweissrollen und der Grösse der Kompensationsbewegung durch Verschiebung der Drehachse 8 kann dabei ein beliebiger Konturverlauf erzielt werden. Figur 5 zeigt eine Stellung, bei der das Werkstück sich weiterhin um die Drehachse 8 dreht, da die Schweissrollen eine Drehung im Drehsinn A bewirken die grösser ist, als die durch die Lageveränderung der Drehachse 8 bewirkte Drehung des Werkstückes um den Klemmpunkt desselben zwischen den Schweissrollen im Drehsinn B.

Figur 6 zeigt die Stellung am Ende des gekrümmten Konturteils. Es ist nun wiederum ein gerader Teil der Kontur zu schweissen, weshalb nun wiederum der Antrieb des Zahnrades 14 so schnell erfolgt, dass sich die Drehbewegungen des Werkstückes im Drehsinn A und im Drehsinn B gerade aufheben, so dass eine geradlinige Schweissung erfolgt.

Nachdem wiederum die gerade Kontur geschweisst ist erfolgt eine erneute Schweissung des Radius der Kontur, indem die schweissrollenbedingte Drehung des Werkstückes im Drehsinn A grösser ist als die lageverändert bedingte Drehung des Werkstückes im Sinne B. Auf diese Weise kann die gesamte Kontur des Werkstückes auf einfache Weise abgefahren werden, bis wiederum der Punkt C von Figur 1 erreicht ist, in welchem der Schweissstrom abgestellt wird, die Werkstückaufnahme blockiert wird und die obere Schweissrolle abgehoben wird. Das Werkstück kann nun entladen werden und ein neues Werkstück kann in die Schweissmaschine eingeführt werden, worauf der Vorgang erneut abläuft.

Wie ersichtlich geworden ist, kann durch die frei drehbare Halterung des Werkstückes und die entsprechende Verschiebung der Drehachse 8 eine beliebige Kontur (konvex und/oder konkav) gefahren werden, indem jeweils die Drehung des Werkstückes im Drehsinn A, die durch die Schweissrollen bewirkt wird, durch die Verschiebung des Drehachsenortes mit entsprechend bewirktem Drehsinn B mehr oder minder kompensiert oder überkompensiert wird. Bei vollständiger Kompensation wird eine gerade Kontur verfolgt, bei teilweiser Kompensation eine mehr oder weniger gekrümmte Kontur, wie beim Beispiel gezeigt. Wird überkompensiert, so ergibt sich ein im Gegensatz zum Beispiel nach aussen gekrümmter Verlauf. Die Drehgeschwindigkeit (Schweissgeschwindigkeit) der Schweissrollen wird dabei durch die Steuerung/Regelung 25 bestimmt, welche auch die Lageveränderung der Drehachse 8 bestimmt, indem sie auf die Antriebe 15 und 18 einwirkt. Das Abfahren der Kontur kann dabei gesteuert erfolgen, indem die Steuerung konturabhängig vorgegebene Werte für die Schweissrollengeschwindigkeit und die Lage der Drehachse 8 einhält. Bevorzugterweise erfolgt indes eine Regelung des Vorganges, indem der Kontrollwinkel K durch den Winkelgeber 9 festgestellt und der Steuerung/Regelung 25 zugeführt wird. Der Kontrollwinkel K ist für jeden Konturpunkt der Kontur bestimmt. Der Kontrollwinkel legt während der Schweissung der Kontur 360° zurück. Jedem Punkt der Kontur kann somit ein Kontrollwinkelwert zugeordnet werden, wobei dies bei der Programmierung der Steuerung mit den Konturkoordinaten erfolgt. In diesem Fall kann durch die Regelung in jedem Punkt der Kontur der aktuelle, vom Drehwinkelgeber 9 gemessene Kontrollwinkel mit dem zuvor berechneten und gespeicherten Kontrollwinkel verglichen werden. Die Abweichung des gemessenen Kontrollwinkels vom Kontrollwinkelsollwert der einer Abweichung von der Sollkontur entspricht, kann dann durch die Regelung kompensiert werden, indem entweder der Schweissrollenantrieb in seiner Geschwindigkeit verändert wird oder der Antrieb der Schwenkführung entsprechend beeinflusst wird. Es könnte auch auf beide Antriebe gleichzeitig eingewirkt werden. Geht man bevorzugterweise von der Beeinflussung der Geschwindigkeit der Schweissrollen aus, so wird, falls der Kontrollwinkel für eine vorgegebene Konturposition zu klein ist der Schweissrollenantrieb so beeinflusst, dass die Geschwindigkeit der Schweissrollen erhöht wird, ist hingegen der Kontrollwinkel zu gross, so wird die Geschwindigkeit der Schweissrollen verringert. Die Geschwindigkeitsänderungen durch die Kontur oder durch eine allfällige Korrektur kann auch den Schweissstrom beeinflussen.

Wird die Verschiebung der Drehachse 8 durch einen externen Antrieb bewirkt, welcher nicht Teil der Schweissmaschine 1 ist, und welcher z.B. ein Roboter sein kann, so kann die Regelung 25 ein Regelsignal über eine Leitung 25' nach aussen abgeben, so dass die Robotersteuerung entsprechend mit einem Korrektursignal versorgt werden kann.

Im gezeigten Beispiel ist die Schweissung einer zweidimensionalen Kontur beschrieben worden. Es ist indes auch möglich einen dreidimensionalen Konturverlauf, bei welchem die Kontur auch in der z-Achse verläuft entsprechend zu schweissen. Zusätzlich zur zweidimensiopnalen Ausführung kommt eine Verschiebung der Rollen in der z-Achse hinzu und eine der Steigung angepasste Verdrehung um eine horizontale Achse durch den Schweisspunkt parallel zu den Rollenachsen. Die Steuerung/Regelung 25 bewirkt entsprechend dem gespeicherten Konturverlauf dann die Höhenverschiebung und Verdrehung der Schweissrollen entsprechend dem gewünschten Konturverlauf. Die Konturverschiebung in z-Achse wird auf die x/y-Achse projiziert und gleicherweise abgefahren. Beispielsweise wird die Kontur in Vektoren aufgeteilt und dann gleichzeitig die x,y- und z-Komponente abgefahren. Die Höhendifferenz der z-Achse ergibt die Steigung, woraus die Verdrehung der Rollen errechnet und dann eingestellt wird.

Das Abfahren der Kontur ist vorliegend anhand der bevorzugten Anwendung beim Schweissen beschrieben worden. Auf die erfindungsgemässe Weise kann indes auch eine Kontur abgefahren werden, wenn nicht geschweisst werden soll. Anstelle der Schweissrollen 19 und 20 sind dann lediglich stromlose, angetriebene Klemmrollen vorgesehen, welche lediglich die Kontur abfahren ohne eine Schweissung vorzunehmen. In diesem Fall wird bei den Klemmrollen ein anderes Bearbeitungs- und/oder Markierungswerkzeug vorgesehen, z.B. ein Laser, welcher das Werkstück, das in diesem Fall z.B. nur ein einzelnes Blech sein kann, das durch den Laser geschnitten wird, bearbeitet.

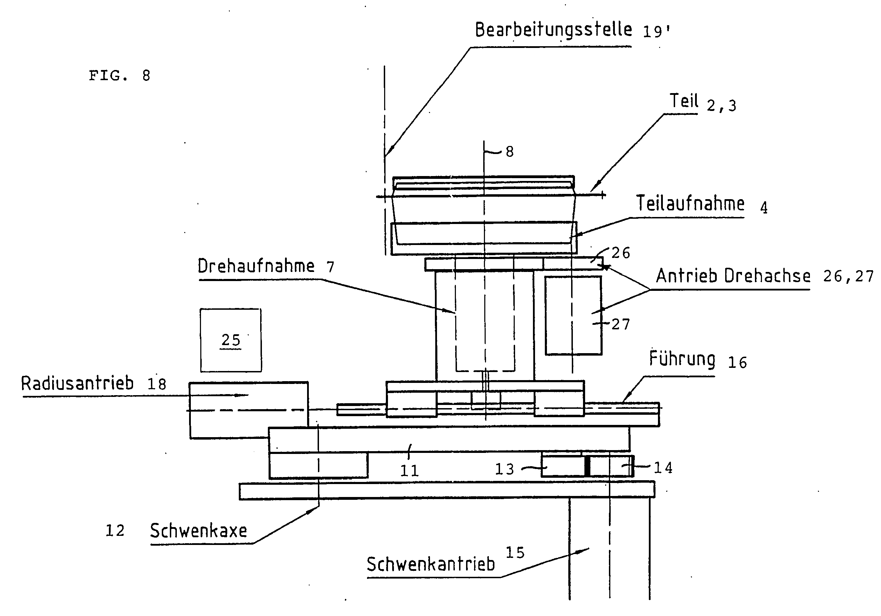

Bei einer anderen, nicht erfindungsgemäassen Lösung wird eine Kontur ohne Schweiss- oder Reibrollen abgefahren. In diesem Fall wird der Kontrollwinkel der Achse 8 durch einen weiteren, gesteuerten Antrieb 26, 27 (Figur 8ff.) für die Teileaufnahme 4 beeinflusst. Diese Lösung ermöglicht das Beschneiden einer Konturkante mittels Laser, Schneidbrenner, Wasserstrahl oder anderem Mittel, was durch die Bearbeitungsstelle 19' angedeutet ist. Falls der Kontrollwinkel aktiv angetrieben wird, geht allerdings die automatische Konturüberwachung und Konturkorrektur verloren. Mit einem aktiven Antrieb 27 der Drehachse 8 können auch offene, nicht geschlossene Konturen erzeugt oder am Konturende eine bestimmte neue Position z.B. eine Lade- oder Entladeposition angefahren werden.

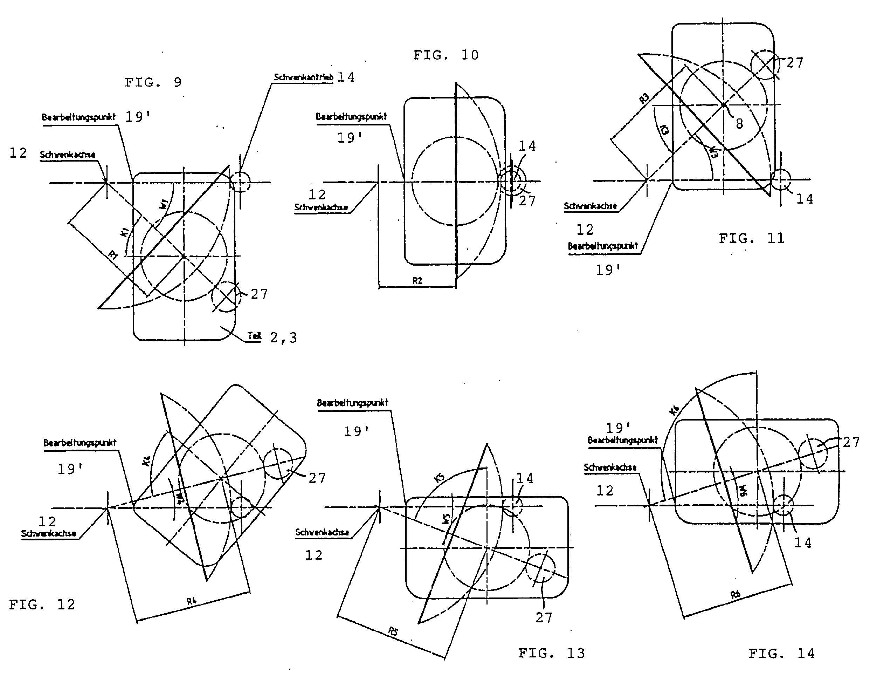

Es sind also bei diesem Aspekt der Erfindung nicht mehr die Schweissrollen oder Klemmrollen, die das Drehmoment um die Achse 8 erzeugen, sondern ein gesteuerter Antrieb 26,27, z.B. ein Elektromotor, dreht die Werkstückaufnahme 4 um die Achse 8, durch den Antrieb 27 unter- oder überkompensiert, um die Kontur abzufahren, die vorzugsweise mit einem beliebigen Bearbeitungsmittel, z.B. einem Laserstrahl oder Prüfmittel, am Werkstück bearbeitet oder geprüft wird. Die sonstigen Erläuterungen zum Beispiel der Figuren 1 bis 7 gelten aber auch für diesen nicht erfindungsgemässen Aspekt und gleiche Bezugszeichen in den Figuren 8 bis 14 bezeichnen die selben Elemente wie in den Figuren 1 bis 7. Die Figuren 9 bis 14 zeigen ebenfalls verschiedene Stellungen beim Verfolgen einer Kontur, wobei nun der Antrieb 27 die Drehung der Werkstück- bzw. Teileaufnahme um die Achse 8 bewirkt.

## Patentansprüche

1. Verfahren zum Konturschweissen mittels Schweissrollen (10, 20), **dadurch gekennzeichnet, dass** das zu schweissende Werkstück (2, 3) um eine senkrecht zur Schweissebene stehende Drehachse (8) frei drehbar gehalten wird, so dass die zur Schweissung angetriebenen Schweissrollen eine Drehung des Werkstücks (2, 3) um die Drehachse (8) bewirken, und dass die Drehachse (8) bei der Schweissung derart verschoben wird, dass die schweissrollenbedingte Drehung des Werkstückes bei geraden Konturabschnitten kompensiert und bei konvex oder konkav gekrümmten Konturabschnitten teilweise kompensiert oder überkompensiert wird.

2. Verfahren nach Anspruch 1, **dadurch gekennzeichnet, dass** die Drehachse durch ein schweissmaschineneigenes, angetriebenes Verschiebemittel (11 bis 18) oder durch ein schweissmaschinenexternes Verschiebemittel, insbesondere einen Roboter, verschoben wird.

3. Verfahren nach Anspruch 2, **dadurch gekennzeichnet, dass** das schweissmaschineneigene Verschiebemittel ein erstes, um eine Schwenkachse (12) verschwenkbares Führungsmittel (11, 13, 14, 15) für die Drehachse (8) und ein zweites, linear verschiebbares Führungsmittel (16, 17, 18) für die Drehachse aufweist.

4. Verfahren nach einem der Ansprüche 1 bis 3, **dadurch gekennzeichnet, dass** die Verschiebung der Drehachse (8) und der Antrieb der Schweissrollen durch eine gemeinsame Steuerung (25) gesteuert werden.

5. Verfahren nach Anspruch 4, **dadurch gekennzeichnet, dass** die Steuerung als Regelung arbeitet, indem sie als Eingangsgrösse den Drehwinkel (K) des Werkstückes um die Drehachse verarbeitet.

6. Verfahren nach Anspruch 5, **dadurch gekennzeichnet, dass** die Regelung mit ihrer Ausgangsgrösse die Geschwindigkeit des Schweissrollenantriebs bestimmt, wobei bei zu kleinem Drehwinkel die Geschwindigkeit erhöht, bei zu grossem Drehwinkel die Geschwindigkeit verringert wird.

7. Verfahren nach Anspruch 6, **dadurch gekennzeichnet, dass** in der Steuerung den gespeicherten Konturdaten entsprechende Drehwinkeldaten zugeordnet sind.

8. Verfahren nach einem der Ansprüche 1 bis 7, **dadurch gekennzeichnet, dass** dreidimensionale Konturen durch eine zusätzliche Vertikalverschiebung der drehbaren Halterung oder der Schweissrollen und eine Verdrehung derselben um eine horizontale Achse durch den Schweisspunkt parallel zu den Rollenachsen geschweisst werden.

9. Verfahren nach einem der Ansprüche 1 bis 8, **dadurch gekennzeichnet, dass** anstelle der Schweissrollen Klemmrollen verwendet werden, um anstelle des Schweissens lediglich eine Kontur abzufahren, wobei vorzugsweise bei den Klemmrollen ein Werkzeug oder Prüfmittel angeordnet ist.

10. Verfahren nach Anspruch 9, **dadurch gekennzeichnet, dass** das Werkzeug ein Markierungswerkzeug und/oder ein Bearbeitungswerkzeug ist, insbesondere ein Laser.

11. Schweissvorrichtung (1) zum Konturschweissen mit angetriebenen Schweissrollen (19, 20) mit einer Halterung (4, 5) zur Aufnahme des zu schweissenden Werkstückes (2, 3) aufweist, welche im Schweissbetrieb frei um eine Drehachse (8) drehbar und zusätzlich in ihrer Lage zu den Schweissrollen durch Lageänderung der Drehachse einstellbar ist, und wobei eine Steuerung (25) und Antriebsmittel (15, 18, 21, 22) vorgesehen sind, durch die die Lageeinstellung der Halterung im Schweissbetrieb veränderbar ist, **dadurch gekennzeichnet, daß** die Drehachse, um welche die Halterung (4, 5) frei drehbar ist, senkrecht zur Schweißebene steht, und die Schweissrollengeschwindigkeit im Schweißbetrieb veränderbar ist.

12. Schweissvorrichtung nach Anspruch 11, **dadurch gekennzeichnet, dass** eine Messeinrichtung (9) für den Drehwinkel der Halterung vorgesehen ist, deren Ausgangssignal mit der Steuerung (25) verbunden ist.

13. Schweissvorrichtung nach Anspruch 12, **dadurch gekennzeichnet, dass** die Steuerung als Regelung ausgestaltet ist, die aus dem Ausgangssignal der Messeinrichtung ihrerseits ein Geschwindigkeitssignal für den Antrieb der Schweissrollen erzeugt.

14. Schweissvorrichtung nach einem der Ansprüche 10 bis 13, **dadurch gekennzeichnet, dass** die Lage der Drehachse durch eine um eine Schwenkachse (12) angetrieben schwenkbare Schwenkführung (11, 13, 14, 15) und eine daran angeordnete angetriebene Linearführung (16, 17, 18) durch die Steuerung bzw. Regelung (25) einstellbar ist.

15. Schweissvorrichtung nach einem der Ansprüche 11 bis 14, **dadurch gekennzeichnet, dass** das die Halterung oder die Schweissrollen höhenverstellbar und um eine durch den Schweisspunkt laufende Achse verschwenkbar sind, um dreidimensionale Konturen zu schweissen.

16. Schweissvorrichtung nach Anspruch 12, **dadurch gekennzeichnet, dass** das Signal der Messeinrichtung (9) direkt oder über die Steuerung an einen Ausgangsanschluss geführt ist.

17. Konturfolgevorrichtung mit angetriebenen Klemmrollen (19, 20) bzw. mit einer Halterung (4, 5) zur Aufnahme des Werkstückes (2, 3) aufweist, welche im Betrieb frei um eine Drehachse (8) drehbar und zusätzlich in ihrer Lage zu den Klemmrollen durch Lageänderung der Drehachse einstellbar ist, und wobei eine Steuerung (25) und Antriebsmittel (15, 18, 21, 22) vorgesehen sind, durch die die Klemmrollengeschwindigkeit und die Lageeinstellung der Halterung im Betrieb veränderbar sind.

18. Konturfolgevorrichtung nach Anspruch 17, **dadurch gekennzeichnet, dass** bei den Klemmrollen ein Markierungswerkzeug und/oder ein Bearbeitungswerkzeug, z.B. ein Laser, angeordnet ist.

## Claims

1. Method for contour welding by means of welding rollers (10, 20), **characterised in that** the workpiece (2, 3) to be welded is held freely rotatable about a rotation axis (8) standing perpendicular to the welding plane, so that the welding rollers driven for welding achieve a rotation of the workpiece (2, 3) about the axis of rotation (8), and **in that** the axis of rotation (8) during welding is displaced such that the workpiece rotation caused by the welding rollers is compensated on straight contour sections and is partially compensated or over-compensated on convex or concave curved contour sections.

2. Method according to Claim 1, **characterised in that** the rotation axis is displaced by a driven displacement means (11 to 18) integral to the welding machine or by a displacement means external to the welding machine, in particular a robot.

3. Method according to Claim 2, **characterised in that** the displacement means integral to the welding machine comprises a first guide means (11, 13, 14, 15), swivelable about a swivel axis (12), for the rotation axis (8), and a second longitudinally displaceable guide means (16, 17, 18) for the rotation axis.

4. Method according to any one of Claims 1 to 3, **characterised in that** the displacement of rotation axis (8) and the drive of the welding rollers are controlled by a common control unit (25).

5. Method according to Claim 4, **characterised in that** the control unit functions as a regulator **in that** it processes as an input parameter the rotation angle (K) of the workpiece about the rotation axis.

6. Method according to Claim 5, **characterised in that** the regulator determines with its output parameter the speed of the welding roller drive, wherein the speed increases if the rotation angle is too small and decreases if the rotation angle is too large.

7. Method according to Claim 6, **characterised in that** in the control unit, corresponding rotation angle data are allocated to the stored contour data.

8. Method according to any one of Claims 1 to 7, **characterised in that** three-dimensional contours are welded by an additional vertical displacement of the rotatable holder or welding rollers and a twist thereof about a horizontal axis through the welding point parallel to the roller axes.

9. Method according to any one of Claims 1 to 8, **characterised in that**, instead of the welding rollers, clamping rollers are used in order, instead of welding, merely to trace a contour, wherein preferably a tool or test instrument is arranged on the clamping rollers.

10. Method according to Claim 9, **characterised in that** the tool is a marking tool and/or a machining tool, in particular a laser.

11. Welding device (1) for contour welding with driven welding rollers (19, 20), with a holder (4, 5) to hold the workpiece (2, 3) to be welded, which holder (4, 5) in welding operation is freely rotatable about a rotation axis (8) and also adjustable in its position in relation to the welding rollers by a position change of the rotation axis, and wherein a control unit (25) and drive means (15, 18, 21, 22) are provided, via which the position of the holder can be modified in welding operation, **characterised in that** the rotation axis about which the holder (4, 5) is freely rotatable stands perpendicular to the welding plane and the welding roller speed is modifiable in welding operation.

12. Welding device according to Claim 11, **characterised in that** a measurement device (9) for the rotation angle of the holder is provided, the output signal from which is connected to the control unit (25).

13. Welding device according to Claim 12, **characterised in that** the control unit is designed as a regulator which from the output signal from the measurement device in turn generates a speed signal for the welding roller drive.

14. Welding device according to any one of Claims 10 to 13, **characterised in that** the position of the rotation axis can be adjusted by the control or regulation unit (25) via a swivel guide (11, 13, 14, 15) driven swivelable about a swivel axis (12) and arranged thereon a driven linear guide (16, 17, 18).

15. Welding device according to any one of Claims 11 to 14, **characterised in that** the holder or welding rollers are height-adjustable and swivelable about an axis running through the welding point in order to weld three-dimensional contours.

16. Welding device according to Claim 12, **characterised in that** the signal from the measurement device (9) is conveyed directly or via the control unit to an output connection.

17. Contour-tracing device with driven clamping rollers (19, 20) or with a holder (4, 5) to hold the workpiece (2, 3) which in operation is freely rotatable about a rotation axis (8) and in addition is adjustable in its position in relation to the clamping rollers by a position change of the rotation axis, and wherein a control unit (25) and drive means (15, 18, 21, 22) are provided by which the speed of the clamping rollers and the position of the holder can be modified in operation.

18. Contour-tracing device according to Claim 17, **characterised in that** on the clamping rollers a marking tool and/or a machining tool, e.g. a laser, is arranged.

## Revendications

1. Procédé de soudage de contour au moyen de galets de soudage (10, 20), **caractérisé en ce que** la pièce (2, 3) à souder est maintenue à rotation libre autour d'un axe de rotation (8) perpendiculaire au plan de soudage de telle sorte que les galets de soudage entraînés pour le soudage mettent la pièce (2, 3) en rotation autour de l'axe de rotation (8) et **en ce que** lors du soudage, l'axe de rotation (8) est déplacé de telle sorte que la rotation de la pièce provoquée par les galets de soudage est compensée sur les parties rectilignes du contour et est compensée partiellement ou surcompensée lorsque les parties du contour sont courbées de manière convexe ou concave.

2. Procédé selon la revendication 1, **caractérisé en ce que** l'axe de rotation est déplacé par un moyen de déplacement (11 à 18) entraîné et propre à la machine de soudage ou par un moyen de déplacement externe à la machine de soudage et en particulier un robot.

3. Procédé selon la revendication 2, **caractérisé en ce que** le moyen de déplacement propre à la machine de soudage présente un premier moyen de guidage (11, 13, 14, 15) de l'axe de rotation (8), qui peut pivoter autour d'un axe de pivotement (12), et un deuxième moyen de guidage (16, 17, 18) de l'axe de rotation qui peut se déplacer linéairement.

4. Procédé selon l'une des revendications 1 à 3, **caractérisé en ce que** le déplacement de l'axe de rotation (8) et l'entraînement des galets de soudage sont commandés par une commande (25) commune.

5. Procédé selon la revendication 4, **caractérisé en ce que** la commande travaille comme régulation par le fait qu'elle traite comme grandeur d'entrée l'angle de rotation (K) de la pièce autour de l'axe de rotation.

6. Procédé selon la revendication 5, **caractérisé en ce que** la régulation détermine avec sa grandeur de sortie la vitesse de l'entraînement des galets de soudage, la vitesse augmentant lorsque l'angle de rotation est trop petit et la vitesse diminuant lorsque l'angle de rotation est trop grand.

7. Procédé selon la revendication 6, **caractérisé en ce que** des données appropriées d'angle de rotation sont associées aux données de contour conservées en mémoire dans la commande .

8. Procédé selon l'une des revendications 1 à 7, **caractérisé en ce que** des contours tridimensionnels sont soudés par un déplacement vertical supplémentaire du support rotatif ou des galets de soudage et une rotation de ces derniers autour d'un axe horizontal qui passe par le point de soudage et qui est parallèle à l'axe des galets.

9. Procédé selon l'une des revendications 1 à 8, **caractérisé en ce qu'**au lieu de galets de soudage, on utilise des galets de serrage pour uniquement suivre un contour au lieu de le souder, un outil ou un moyen de vérification étant de préférence disposés sur les galets de serrage.

10. Procédé selon la revendication 9, **caractérisé en ce que** l'outil est un outil de repérage et/ou un outil de traitement, en particulier un laser.

11. Dispositif de soudage (1) pour le soudage de contour, qui présente des galets entraînés de soudage (19, 20), un support (4, 5) qui reprend la pièce (2, 3) à souder et qui peut tourner librement autour d'un axe de rotation (8) lorsqu'il fonctionne en soudage, sa position par rapport aux galets de soudage pouvant de plus être ajustée par modification de la position de l'axe de rotation, une commande (25) et des moyens d'entraînement (15, 18, 21, 22) étant prévus pour modifier le réglage de position du support en fonctionnement de soudage,
**caractérisé en ce que**
l'axe de rotation autour duquel le support (4, 5) peut tourner librement est perpendiculaire au plan de soudage et **en ce que** la vitesse des galets de soudage peut être modifiée pendant le travail de soudage.

12. Dispositif de soudage selon la revendication 11, **caractérisé en ce qu'**un dispositif de mesure (9) de l'angle de rotation du support est prévu et **en ce que** son signal de sortie est relié à la commande (25).

13. Dispositif de soudage selon la revendication 12, **caractérisé en ce que** la commande est configurée comme régulation qui, à partir du signal de sortie du dispositif de mesure, forme pour sa part un signal de vitesse pour l'entraînement des galets de soudage.

14. Dispositif de soudage selon l'une des revendications 10 à 13, **caractérisé en ce que** la commande ou la régulation (25) permettent d'ajuster la position de l'axe de rotation par un guide pivotant (11, 13, 14, 15), entraîné et apte à pivoter autour d'un axe de pivotement (12) et un guide linéaire (16, 17, 18) entraîné et disposé sur le précédent.

15. Dispositif de soudage selon l'une des revendications 11 à 14, **caractérisé en ce que** pour souder des contours tridimensionnels, le support ou les galets de soudage peuvent être ajustés en hauteur et pivotés autour d'un axe qui passe par le point de soudage.

16. Dispositif de soudage selon la revendication 12, **caractérisé en ce que** le signal du dispositif de mesure (9) est amené directement ou par l'intermédiaire de la commande à une borne de sortie.

17. Dispositif de suivi de contour doté de galets entraînés de serrage (19, 20) qui présente un support (4, 5) de reprise d'une pièce (2, 3), lequel support peut tourner librement autour d'un axe de rotation (8) et sa position par rapport aux galets de serrage peut être modifiée par modification de la position de l'axe de rotation, une commande (25) et des moyens d'entraînement (15, 18, 21, 22) étant prévus pour modifier en fonctionnement la vitesse des galets de serrage et le réglage de la position du support.

18. Dispositif de suivi de contour selon la revendication 17, **caractérisé en ce qu'**un outil de repérage et/ou un outil de traitement, par exemple un laser, sont associés aux galets de serrage.
